## Europäisches Patentamt
## European Patent Office
## Office européen des brevets

(19)

(11) Numéro de publication: **0 014 645**
**B1**

(12) **FASCICULE DE BREVET EUROPEEN**

(45) Date de publication du fascicule de brevet:
31.03.82

(21) Numéro de dépôt: **80400157.6**

(22) Date de dépôt: **31.01.80**

(51) Int. Cl.³: **B 60 G 11/26**, F 16 F 9/06,
F 16 F 9/32

(54) Suspension oléopneumatique à jambe télescopique pour véhicule.

(30) Priorité: **02.02.79 FR 7902801**

(43) Date de publication de la demande:
**20.08.80 Bulletin 80/17**

(45) Mention de la délivrance du brevet:
**31.03.82 Bulletin 82/13**

(84) Etats contractants désignés:
**DE GB IT**

(56) Documents cités:
**FR-A-1 148 506**
**FR-A-1 153 848**
**FR-A-1 385 242**
**FR-A-2 206 723**
**FR-A-2 236 117**
**FR-A-2 338 421**
**FR-A-2 398 628**
**US-A-2 243 782**
**US-A-2 844 367**
**US-A-3 290 037**

(73) Titulaire: **SOCIETE ANONYME AUTOMOBILES CITROEN,
117 à 167, Quai André Citroen, F-75747 Paris
Cedex 15 (FR)**
Titulaire: **AUTOMOBILES PEUGEOT, 75, avenue de la
Grande Armée, F-75116 Paris (FR)**

(72) Inventeur: **Roche, Alain Gilbert, 30, rue de la Saussaye,
F-91300 Massy (FR)**

(74) Mandataire: **Michardière, Bernard et al, Cabinet
Plasseraud 84, rue d'Amsterdam, F-75009 Paris (FR)**

Suspension oléopneumatique à jambe télescopique pour véhicule

L'invention est relative aux suspensions oléopneumatiques à jambe télescopique, sensiblement verticale, notamment pour roues directrices de véhicules, du genre de celles qui comprennent:

— un élément inférieur, support de roue, relié par un levier articulé, sensiblement transversal, à la structure du véhicule;
— un élément supérieur articulé sur la structure du véhicule et servant de guidage à l'élément inférieur, ces deux éléments pouvant coulisser et éventuellement tourner l'un par rapport à l'autre;
— et des moyens pour faire agir du liquide sous pression entre les éléments de manière telle que ce liquide ait tendance à écarter axialement l'un de l'autre les éléments.

L'nvention concerne, plus particulièrement, mais non exclusivement, une suspension pour roue directrice d'un véhicule automobile disposant d'une source de liquide sous pression, le liquide de la suspension se trouvant alors sous haute pression.

On connaît déjà une suspension oléopneumatique de ce genre par la demande de brevet FR-A-2 398 628 (publiée après la date de priorité). Selon cette demande de brevet, une disposition relativement complexe a été adoptée pour réduire, au minimum, les efforts parasites transversaux qui peuvent gêner le coulissement relatif des deux éléments et, éventuellement, leur rotation.

Par ailleurs, le brevet US-A-3 290 037 montre un ensemble télescopique comprenant un élément inférieur et un élément supérieur. Il s'agit, toutefois, d'un amortisseur et non pas d'une suspension oléopneumatique du genre de celle définie précédemment. Un tel amortisseur doit pouvoir travailler aussi bien en compression qu'en extension, ce qui impose des liaisons entre les diverses parties et éléments de cet amortisseur pouvant conduire à des réactions transversales parasites gênantes pour le coulissement.

L'invention a pour but, surtout, de rendre les suspensions du genre en question telles qu'elles soient d'une construction plus simple tout en permettant de résoudre le problème du guidage en coulissement et éventuellement en rotation des deux éléments l'un par rapport à l'autre en dépit des efforts transversaux parasites, et le problème de l'étanchéité pour le liquide sous pression, malgré ces efforts parasites transversaux.

Selon l'invention, une suspension oléopneumatique à jambe télescopique sensiblement verticale, du genre défini précédemment, est caractérisée par le fait que l'un des deux éléments comprend un organe tubulaire muni, à une extrémité, d'un alésage et un piston propre à coulisser de manière étanche dans cet alésage suivant une direction parallèle à l'axe de la jambe télescopique, le liquide sous pression étant contenu dans le volume intérieur de cet organe tubulaire fermé par le piston, tandis que l'autre élément comprend un cylindre entourant l'organe tubulaire et coaxial à ce dernier, ce cylindre étant fermé à une extrémité par un fond contre lequel appuie le susdit piston, le guidage en coulissement et éventuellement en rotation entre les deux éléments étant réalisé d'une manière connue en elle-même entre les susdits cylindre et organe tubulaire.

Grâce à cette disposition, le piston qui transmet les efforts de poussée axiale n'est pas soumis aux efforts parasites transversaux de telle sorte que l'étanchéité du coulissement du piston peut être assurée dans de bonnes conditions et la section de ce piston peut être faible; le guidage entre les deux éléments est réalisé au niveau de pièces de plus forte section, propres à bien résister aux efforts parasites transversaux, pièces entre lesquelles aucune étanchéité à un liquide sous pression n'est à assurer.

Selon une première possibilité, l'organe tubulaire et le piston appartiennent à l'élément supérieur de la jambe télescopique; les moyens pour faire agir le liquide sous pression, dans cet organe tubulaire, comprennent un accumulateur oléopneumatique qui est, dans cette première solution, avantageusement fixé sur la structure (partie suspendue) du véhicule; l'élément inférieur comprend le cylindre entourant l'organe tubulaire.

Selon une autre solution, ledit organe tubulaire et le piston appartiennent à l'élément inférieur, tandis que le cylindre, entourant l'organe tubulaire, appartient à l'élément supérieur et est articulé sur la structure du véhicule; dans cette seconde solution, l'accumulateur oléopneumatique est, généralement, fixé sur l'élément inférieur.

Dans tous les cas, l'élément tubulaire est, de préférence, monté coulissant et éventuellement à rotation, dans le cylindre, par deux paliers disposés respectivement à l'éxtrémité ouverte de ce cylindre et à l'extrémité de l'organe tubulaire, logée dans le cylindre.

Avantageusement, le palier situé à l'extrémité de l'organe tubulaire logée dans le cylindre est monté solidaire axialement de cet organe tubulaire mais libre en rotation afin de réduire, notamment lorsque l'élément articulé sur la structure est bloqué en rotation, les couples résistants dus au frottement qui s'opposent à la rotation de l'élément inférieur support de roue.

Des butées sont prévues pour limiter le coulissement relatif des deux éléments; ces butées sont avantageusement formés par deux manchons en matière élastomère disposés radialement à l'intérieur du cylindre, et axialement situés vers les extrémités du cylindre.

Dans le cas où le susdit palier libre en rotation est prévu, les butées sont situées de part et d'autre de ce palier qui coopère en fin de course avec l'une ou l'autre desdites butées.

Le piston peut être formé par un corps creux cylindrique, fermé à son extrémité en appui contre le fond du cylindre et ouvert à son autre extrémité qui débouche dans le volume intérieur de l'organe tubulaire.

La longueur axiale de l'alésage de cet organe tubulaire peut être suffisante pour assurer un guidage satisfaisant du piston; toutefois, on peut prévoir une bague, de diamètre intérieur ajusté à celui du piston, qui est centrée à la partie inférieure du cylindre et disposée en partie dans le volume intérieur d'une butée de débattement; la longueur axiale de l'alésage de guidage de l'organe tubulaire peut alors être réduite, la bague servant de centrage au piston.

L'invention concerne, également, un véhicule automobile équipé d'une suspension conforme à l'invention.

L'invention consiste, mises à part les dispositions exposées ci-dessus, en certaines autres dispositions dont il sera plus explicitement question ci-après à propos de modes de réalisation particuliers décrits avec référence aux dessins ci-annexés, qui ne sont nullement limitatifs.

La fig. 1, de ces dessins, est une vue schématique en coupe transversale d'une suspension conforme à l'invention.

La fig. 2 montre, semblablement à fig. 1, une variante de réalisation.

La fig. 3 est une coupe transversale d'une suspension selon l'invention.

La fig. 4 montre, à plus grande échelle, un détail de la fig. 3.

La fig. 5, enfin, montre une variante de réalisation du guidage du piston de la fig. 3.

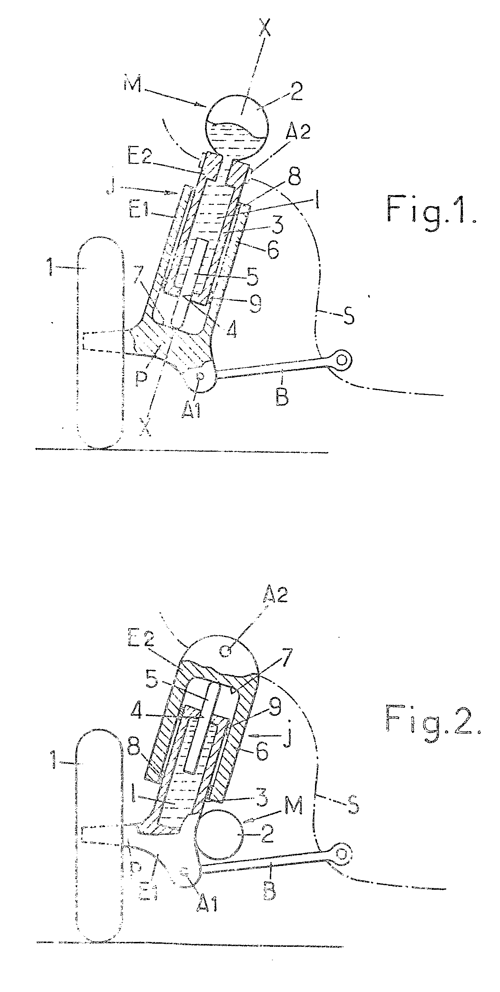

En se reportant aux dessins, plus particulièrement aux fig. 1 à 3, on peut voir une suspension oléopneumatique à jambe télescopique j sensiblement verticale pour roue directrice d'un véhicule automobile. Cette suspension comprend un élément inférieur E1 solidaire du pivot P de la roue 1, et servant de support à cette roue.

Cet élément inférieur E1 est relié à la structure S du véhicule par un levier oscillant inférieur B sensiblement transversal et articulé, à ses extrémités, respectivement en A1 sur l'élément inférieur E1 et sur la structure S. La jambe télescopique comprend, en outre, un élément supérieur E2 articulé, vers sa partie supérieure, en A2 sur la structure S.

Les deux éléments E1 et E2 peuvent coulisser l'un par rapport à l'autre; en outre, il arrive fréquemment que l'élément supérieur E2 soit bloqué en rotation par rapport à la structure S de telle sorte que les deux éléments E1 et E2 doivent pouvoir également tourner l'un par rapport à l'autre. Il existe des cas, cependant, pour lesquels l'élément E2 est monté à rotation dans la structure S de manière à pouvoir tourner avec l'élément inférieur E1.

Des moyens M sont prévus pour faire agir du liquide I sous pression entre les éléments E1 et E2 de manière telle que ce liquide ait tendance à écarter axialement l'un de l'autre les deux éléments. Ces moyens M comprennent un accumulateur oléopneumatique classique 2 contenant un gaz sous pression séparé du liquide par une membrane élastique; les variations de volume du gaz sous pression permettent d'absorber les déplacements du liquide maintenu sous pression; la partie de cet accumulateur 2 contenant du liquide est reliée à une source de liquide sous pression, montée sur le véhicule, et non représentée sur les dessins.

L'un des deux éléments E1, E2 comprend un organe tubulaire 3 muni, à une extrémité, d'un alésage 4, et un piston 5 propre à coulisser le manière étanche dans cet alésage suivant une direction parallèle à l'axe X-X de la jambe télescopique; généralement, ce piston 5 est coaxial à cette jambe j. Le liquide sous pression I est contenu dans le volume intérieur de cet organe tubulaire 3 fermé par le piston 5.

L'autre élément comprend un cylindre 6 entourant l'organe tubulaire 3 et coaxial à ce dernier; ce cylindre est fermé à une extrémité par un fond 7 contre lequel appuie le susdit piston 5.

Le guidage en coulissement et éventuellement en rotation entre les éléments est réalisé entre le cylindre 6 et l'organe tubulaire 3 par des paliers 8, 9, prévus, respectivement, à l'extrémité ouverte du cylindre 6 et à l'extrémité de l'organe tubulaire 3 logée dans le cylindre.

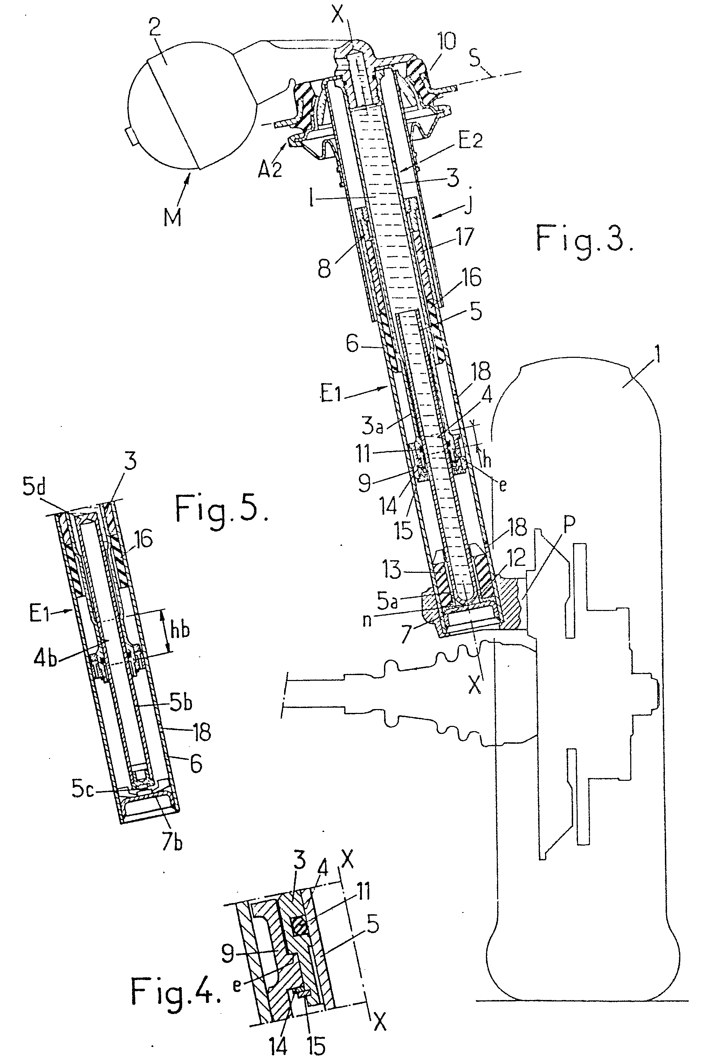

Dans la solution des figures 1 et 3, l'élément supérieur E2 comprend le susdit organe tubulaire 3 et le piston 5; l'accumulateur oléopneumatique 2 est alors avantageusement fixé sur la structure S (partie suspendue du véhicule), l'alimentation en liquide sous pression de l'organe tubulaire 3 s'effectuant vers sa partie supérieure; l'élément inférieur E1 est formé par le cylindre 6.

Selon la solution de la figure 2, l'élément inférieur E1 est formé par l'organe tubulaire 3 et le piston 5, tandis que l'élément supérieur E2 est formé par le cylindre 6; l'accumulateur oléopneumatique 2 est alors fixé sur l'élément inférieur E1.

On se reportera, maintenant, à la figure 3 représentant le détail d'une réalisation, le bras transversal B n'étant cependant pas représenté sur cette figure.

Comme déjà indiqué précédemment, l'élément supérieur E2 est formé par l'organe tubulaire 3 et le piston 5 lesquels sont situés l'intérieur du cylindre 6 de l'élément inférieur E1. L'articulation A2 de l'élément supérieur E2 sur la structure S comprend un coussin en matière élastomère 10; l'élément E2 est arrêté en rotation par rapport à la structure S. L'accumulateur oléopneumatique 2 est formé par une sphère formant récipient de gaz sous pression qui constitue le ressort de suspension; à l'entrée de cette sphère est disposé, de manière connue, un système d'amortissement (non visible) qui consiste à freiner l'écoulement de liquide résultant du coulissement du piston 5 glissant de manière étanche grâce au joint 11 dans l'alésage 4. La longueur axiale de cet alésage 4 est désignée par h.

On prévoit un montage du piston 5 propre à lui faire subir un minimum de contraintes transversales. Selon une première possibilité, représentée sur la figure 3, la longueur axiale h de l'alésage 4 est faible et, à son extrémité 5a en appui contre le fond 7, le piston 5 est maintenu par une bague 12, en matière qui assure un faible coefficient de frottement entre le piston 5 et ladite bague; cette dernière peut être réalisée en matière plastique à faible coefficient de frottement. Cette bague 12 est centrée à la partie inférieure du cylindre 6 et disposée en partie dans le volume intérieur d'une butée de débattement 13 formée par un manchon en matière élastomère, destinée à limiter le coulissement relatif des éléments E1 et E2 dans le sens correspondant aux charges maximales.

Selon une autre possibilité, représentée sur la figure 5, la longueur axiale hb de l'alésage 4b est notable et suffisante pour que cet alésage assure seul le guidage du piston 5b; ce dernier est alors seulement en appui inférieur en 5c dans l'axe de la jambe télescopique, contre le fond 7b sans centrage.

En se reportant de nouveau à la figure 3, on voit que le palier 9 prévu à l'extrémité inférieure de l'organe tubulaire 3 est arrêté sur l'extrémité inférieure de cet organe par des moyens classiques tels qu'un épaulement e extérieur de l'organe 3 et une bague 14 maintenue sur l'extrémité de l'organe 3 par un anneau élastique 15 ancré dans une gorge périphérique prévue à l'extrémité de cet organe 3.

Le palier 9 est monté de manière à pouvoir tourner librement autour de l'extrémité de l'organe 3, tout en étant lié axialement à cet organe.

Une autre butée, de contre-débattement, 16 est prévue pour limiter l'amplitude du coulissement relatif des éléments E1, E2. Cette butée 16, comme la butée 13, est disposée radialement entre l'organe tubulaire 3 (ou le piston 5) et la paroi intérieure du cylindre 6. Cette butée 16 est formée par un manchon de matière élastomère emmanché légèrement dur dans l'alésage du cylindre 6; cette butée 16 est en appui supérieur contre le palierguide 8 solidaire de l'extrémité supérieure du cylindre 6, notamment par vissage, par l'intermédiaire d'un tube entretoise 17, de préférence en matière plastique, qui n'est pas déformé lors de la compression de la butée 16.

La partie inférieure 3a de l'organe tubulaire 3 est amincie, c'est-à-dire que son diamètre extérieur est plus faible de manière à permettre l'écrasement de la butée 16 par le palier rotatif 9 en fin de course correspondant aux allongements maximaux de la jambe télescopique.

En effet, les butées 13 et 16 sont situées de part et d'autre de ce palier 9 et coopèrent avec ce dernier en fin de course dans l'un ou l'autre sens.

Le piston 5 peut être constitué par un corps creux fermé à son extrémité 5a voisine du fond du cylindre, et ouvert à son extrémité débouchant dans l'organe 3; dans ce cas, le piston 5 est rempli de liquide sous pression. L'extrémité arrondie 5a est munie d'une portée en saillie n assurant un contact de faible surface, voire ponctuel, contre le fond 7, pour réduire le frottement s'opposant à la roation entre piston 5 et cylindre 6.

Selon une autre possibilité, le piston 5b (fig. 5) tout en étant creux est fermé à son extrémité 5d située dans l'organe tubulaire 3.

Dans tous les cas, le piston 5 a une section transversale réduite de telle sorte que le volume de liquide à haute pression, déplacé lors des mouvements de coulissement, est relativement faible. La section réduite du piston 5 est possible du fait que ce piston n'est soumis, pratiquement, à aucune contrainte transversale.

Des évents tels que 18 sont prévus dans la paroi du cylindre 6 pour permettre l'évacuation de l'air, lors des déplacements du palier 9, contenu à l'intérieur de ce cylindre.

Le fonctionnement d'une suspension conforme à l'invention résulte immédiatement des explications qui précèdent.

La poussée axiale est transmise par le piston 5, 5b de faible section active; cette faible section est compatible avec les grands débattements de coulissement (du fait que la jambe télescopique se trouve au voisinage de la roue 1), et avec la haute pression de fluide.

Le guidage en coulissement et en rotation est assuré au niveau des paliers 8 et 9 entre l'organe tubulaire 3 et le cylindre 6; ce guidage est effectué sur des pièces de fort diamètre, propres à bien résister aux efforts transversaux parasites de la suspension; aucun problème d'étanchéité ne vient compliquer cette question de guidage.

On obtient, ainsi, une faible résistance de rotation du pivot de roue avec l'élément E1 et les butées 13 et 16 autour de l'élément E2 formé par l'organe 3 et le piston 5, 5b. Cette faible résistance de rotation est obtenue par glissement au niveau des paliers 8 et 9.

La suspension de l'invention est d'une réalisation simple et compacte, notamment suivant la direction transversale puisque toutes les pièces constitutives sont pratiquement coaxiales à l'axe X-X de la jambe télescopique. L'étanchéité au liquide sous pression et la rotation du pivot de roue sont assurées dans de bonnes conditions.

Cette faible résistance de rotation, qui contribue à la douceur du braquage de la roue, continue à être assurée correctement en fin de course relative axiale des éléments E1. E2 lors de la venue en appui d'une des butées 13, 16 contre le palier 9; en effet, ce palier 9 étant monté libre en rotation autour de l'organe 3, le couple de frottement parasite créé par cette venue en appui reste faible.

## Revendications

1. Suspension oléopneumatique à jambe télescopique, sensiblement verticale, notamment pour roue directrice de véhicule, comprenant:

— un élément inférieur ($E_1$), support de roue, relié par un levier articulé (B), sensiblement transversal, à la structure du véhicule;
— un élément supérieur ($E_2$) articulé sur la structure du véhicule et servant de guidage à l'élément inférieur ($E_1$), ces deux éléments pouvant coulisser et éventuellement tourner l'un par rapport à l'autre;
— et des moyens (M) pour faire agir du liquide sous pression entre les éléments ($E_1$, $E_2$) de manière telle que ce liquide ait tendance à écarter axialement l'un de l'autre les deux éléments,

caractérisée par le fait que l'un des deux éléments ($E_1$, $E_2$) comprend un organe tubulaire (3) muni, à une extrémité, d'un alésage (4) et un piston (5) propre à coulisser de manière étanche dans cet alésage suivant une direction parallèle à l'axe (X-X) de la jambe télescopique, le liquide sous pression (1) étant contenu dans le volume intérieur de cet organe tubulaire fermé par le piston, tandis que l'autre élément comprend un cylindre (6) entourant l'organe tubulaire (3) et coaxial à ce dernier, ce cylindre étant fermé à une extrémité par un fond (7) contre lequel appuie le susdit piston (5), le guidage en coulissement et éventuellement en rotation entre les deux éléments ($E_1$, $E_2$) étant réalisé d'une manière connue en elle-même entre les susdits cylindre et organe tubulaire.

2. Suspension selon la revendication 1, caractérisée par le fait que l'organe tubulaire (3) et le piston (5) appartiennent à l'élément supérieur ($E_2$) de la jambe télescopique, les moyens pour faire agir le liquide sous pression dans l'organe tubulaire comprenant un accumulateur oléopneumatique (2) fixé sur la structure du véhicule, tandis que l'élément inférieur ($E_1$) comprend le cylindre (6) entourant l'organe tubulaire.

3. Suspension selon la revendication 1, caractérisée par le fait que l'organe tubulaire (3) et le piston (5) appartiennent à l'élément inférieur ($E_1$), tandis que le cylindre (6) entourant l'organe tubulaire appartient à l'élément supérieur ($E_2$) et est articulé sur la structure du véhicule, les moyens pour faire agir le liquide sous pression dans l'organe tubulaire comprenant un accumulateur oléopneumatique (2) notamment fixé sur l'élément inférieur.

4. Suspension selon l'une quelconque des revendications précédentes, caractérisée par le fait que l'organe tubulaire (3) est monté coulissant, et éventuellement à rotation, dans le cylindre (6) par deux paliers (8, 9) disposés respectivement à l'extrémité ouverte de ce cylindre et à l'extrémité de l'organe tubulaire logée dans le cylindre, et que le palier (9) situé à l'extrémité de l'organe tubulaire logée dans le cylindre est monté solidaire axialement de cet organe tubulaire (3) mais libre en rotation.

5. Suspension selon l'une quelconque des revendications précédentes, comprenant des butées pour limiter le coulissement relatif des deux éléments, caractérisée par le fait que ces butées sont formées par deux manchons (13, 16) en matière élastomère disposés radialement à l'intérieur du cylindre, et axialement situés vers les extrémités du cylindre.

6. Suspension selon l'ensemble des revendications 4 et 5, caractérisée par le fait que les butées (13, 16) sont situées de part et d'autre du palier (9) monté libre en rotation, ce palier coopérant en fin de course avec l'une ou l'autre desdites butées.

7. Suspension selon la revendication 1, caractérisée par le fait qu'une bague (12) de diamètre intérieur ajusté à celui du piston (5) est centrée à la partie inférieure du cylindre et disposée en partie dans le volume intérieur d'une butée (13) de débattement formée par un manchon élastomère, destinée à limiter le coulissement relatif des éléments dans le sens correspondant aux charges maximales.

8. Suspension selon l'une quelconque des revendications précédentes, caractérisée par le fait que le piston (5) est formé par un corps creux cylindrique, fermé à son extrémité en appui contre le fond du cylindre, l'autre extrémité de ce piston qui débouche dans le volume intérieur de l'organe tubulaire pouvant être ouverte.

## Patentansprüche

1. Radaufhängung mit einem teleskopischen, ölpneumatischen, im wesentlichen vertikalen Federbein, insbesondere für ein lenkbares Fahrzeugrad, umfassend:

ein das Rad tragendes unteres Element (E1), das über einen im wesentlichen quergerichteten Lenker (B) mit dem Fahrzeugrahmen verbunden ist,
ein an dem Fahrzeugrahmen angelenktes oberes Element (E2), das zur Führung des unteren Elements (E1) dient, wobei die beiden Elemente relativ zueinander verschiebbar und gegebenenfalls drehbar sind, und
Mittel (M), um eine Druckflüssigkeit zwischen den beiden Elementen (E1, E2) derart zur Wirkung zu bringen, daß die Flüssigkeit die Neigung hat, die beiden Elemente in axialer Richtung auseinander zu drücken,

dadurch gekennzeichnet, daß das eine der beiden Elemente (E1, E2) ein an einem Ende mit einer Bohrung (4) versehenes rohrförmiges Organ (3) und einen Kolben (5) umfaßt, der in dieser Bohrung mit Abdichtung parallel zur Achse (X-X) des teleskopischen Federbeines verschiebbar ist, wobei die Druckflüssigkeit (1) in dem von dem Kolben verschlossenen rohrförmigen Organ enthalten ist, wogegen das andere der beiden Elemente einen Zylinder (6) umfaßt, welcher das rohrförmige Organ (3) koaxial umgibt, wobei der Zylinder an einem Ende durch einen Boden (7) verschlossen ist, an dem sich der Kolben (5) abstützt, und wobei eine Gleit- und gegebenenfalls auch Drehführung zwischen den beiden Elementen (E1, E2) in an sich bekannter Weise zwischen dem Zylinder und dem rohrförmigen Organ erfolgt.

2. Radaufhängung nach Anspruch 1, dadurch gekennzeichnet, daß das rohrförmige Organ (3) und der Kolben (5) zum oberen Element (E2) des Federbeines gehören, wobei die Mittel, welche die Druckflüssigkeit in dem rohrförmigen Organ zur Wirkung bringen, einen Öl-Luft-Behälter (2) umfassen, der an dem Fahrzeugrahmen befestigt ist, während das untere Element (E1) den das rohrförmige Organ umgebenden Zylinder (6) umfaßt.

3. Radaufhängung nach Anspruch 1, dadurch gekennzeichnet, daß das rohrförmige Organ (3) und der Kolben (5) zum unteren Element (E1) gehören, während der das rohrförmige Organ umgebende Zylinder (6) zum oberen Element (E2) gehört und an dem Fahrzeugrahmen angelenkt ist, wobei die Mittel, welche die Druckflüssigkeit in dem rohrförmigen Organ zur Wirkung bringen, einen Öl-Luft-Behälter (2) umfassen, der insbesondere an dem unteren Element befestigt ist.

4. Radaufhängung nach einem der Ansprüche 1 bis 3, dadurch gekennzeichnet, daß das rohrförmige Organ (3) verschiebbar und eventuell drehbar in dem Zylinder (6) mit Hilfe zweier Lager (8, 9) gelagert ist, die an dem offenen Ende dieses Zylinders bzw. an dem innerhalb des Zylinders liegenden Ende des rohrförmigen Organs angeordnet sind, und daß das nahe dem innerhalb des Zylinders liegenden Ende des rohrförmigen Organs gelegene Lager (9) in axialer Richtung fest an dem rohrförmigen Element (3), jedoch gegenüber diesem frei drehbar angeordnet ist.

5. Radaufhängung nach einem der Ansprüche 1 bis 4, wobei Anschläge vorgesehen sind, um eine Relativverschiebung zwischen den beiden Elementen zu begrenzen, dadurch gekennzeichnet, daß die beiden Anschläge von zwei Hülsen (13, 16) aus einem elastomeren Material gebildet sind, die radial innerhalb des Zylinders und axial zu den Enden des Zylinders hin angeordnet sind.

6. Radaufhängung nach den Ansprüchen 4 und 5, dadurch gekennzeichnet, daß die Anschläge (13, 16) beiderseits des frei drehbaren Lagers (9) angeordnet sind, wobei dieses Lager am Ende des Verschiebungsweges mit dem einen oder dem anderen der Anschläge zusammenwirkt.

7. Radaufhängung nach Anspruch 1, dadurch gekennzeichnet, daß ein mit seinem Innendurchmesser an den Durchmesser des Kolbens (5) angepaßter Ring (12) im unteren Abschnitt des Zylinders zentriert und zum Teil innerhalb eines von einer elastomeren Hülse gebildeten Anschlags (13) angeordnet ist, welche zur Begrenzung der Relativverschiebung der Elemente in der entsprechenden Richtung bei maximaler Belastung bestimmt ist.

8. Radaufhängung nach einem der vorhergehenden Ansprüche, dadurch gekennzeichnet, daß der Kolben (5) von einem zylindrischen Hohlkörper gebildet ist, der an seinem an dem Boden des Zylinders anliegenden Ende geschlossen ist, während das andere Ende des Kolbens in den Innenraum des rohrförmigen Organs hineinreicht und offen sein kann.

## Claims

1. An oleopneumatic suspension having a substantially vertical telescopic leg, particularly for a vehicle steering wheel, comprising:

— a lower wheel-supporting element (E1) connected by a substantially transverse articulated lever (B) to the structure of the vehicle,

— an upper element (E2) articulated to the structure of the vehicle and serving to guide the lower element (E1), these two elements being slidable and possibly rotatable in relation to each other,

— and means (M) for causing pressurized liquid to act between said elements (E1, E2) in such a way that this liquid tends to separate the two elements axially one from the other,

characterized by the fact that one of the two elements (E1, E2) comprises a tubular member (3) having at one end a bore (4) and a piston (5) adapted for sealed sliding in this bore in a direction parallel to the axis (X-X) of the telescopic leg, the pressurized liquid (1) being contained in the inner volume of this tubular member closed by the piston, whereas the other element comprises a cylinder (6) surrounding the tubular member (3) and coaxial therewith, this cylinder being closed at one end by a bottom (7) against which said piston (5) bears, the slidable and possibly rotatable guiding between the two elements (E1, E2) being provided in way known per se between said cylinder and tubular member.

2. The suspension as claimed in claim 1, characterized by the fact that the member (3) and the piston (5) belong to the upper element (E2) of the telescopic leg, the means for causing pressurized liquid to act in the tubular member comprising an oleopneumatic accumulator (2) fixed to the structure of the vehicle, whereas the lower element (E1) comprises the cylinder (6) surrounding the tubular member.

3. The suspension as claimed in claim 1, characterized by the fact that the tubular member (3) and the piston (5) belong to the lower element (E1), whereas the cylinder (6) surrounding the tubular member belongs to the upper element (E2) and is articulated to the structure of the vehicle, the means for causing the pressurized liquid to act in the tubular member comprising an oleopneumatic accumulator (2) particularly fixed to the lower element.

4. The suspension as claimed in any one of the preceding claims, characterized by the fact that the tubular element (3) ist slidably, and possibly rotatably, mounted in the cylinder (6) be means of two bearings (8, 9) disposed respectively at the open end of the cylinder an at the end of the tubular member housed in the cylinder, and wherein the bearing (9) situated at the end of the tubular member housed in the cylinder is mounted axially interlocked with this tubular member (3) but free to rotate.

5. The suspension as claimed in any one of the preceding claims, comprising stops for limiting the relative sliding of the two elements, characterized by the fact that these stops are formed by two sleeves (13, 16) made from an elastomer material disposed radially inside the cylinder, and axially situated towards the ends of the cylinder.

6. The suspension as claimed in claims 4 and 5, characterized by the fact that the stops (13, 16) are situated on each side of the freely rotatable bearing (9), this bearing cooperating at the end of travel with one or the other of said stops.

7. The suspension als claimed in claim 1, characterized by the fact that a ring (12) having an inner diameter adjusted to that of the piston (5) is centred at the lower part of the cylinder and disposed partly in the inner volume of a range of movement stop (13) formed by an elastomer sleeve, intended to limit the relative sliding of said elements in the direction corresponding to the maximum loads.

8. The suspension as claimed in any one of the preceding claims, characterized by the fact that the piston (5) is formed by a hollow cylindrical body, closed at its end abutting against the bottom of the cylinder, the other end of this piston which gives into the inner volume of the tubular member being, in particular, possibly open.

Fig.1.

Fig.2.

0 014 645

Fig.3.

Fig.5.

Fig.4.